# EUROPÄISCHE PATENTSCHRIFT

(11) **EP 3 363 218 B1**
(45) Veröffentlichungstag und Bekanntmachung des Hinweises auf die Patenterteilung: **03.07.2019**
(21) Anmeldenummer: 16778708.4
(22) Anmeldetag: 22.09.2016
(51) Int. Cl.: H04W 4/02, H04W 4/44, G01C 21/34, G01C 21/36

(54) **VERFAHREN UND VORRICHTUNG ZUR SELEKTIVEN ÜBERTRAGUNG VON DATEN**
METHOD AND DEVICE FOR THE SELECTIVE TRANSMISSION OF DATA
PROCÉDÉ ET DISPOSITIF DE TRANSMISSION SÉLECTIVE DES DONNÉES

(30) Priorität: 15.10.2015 DE 102015220070
(43) Veröffentlichungstag der Anmeldung: 22.08.2018
(73) Patentinhaber: Continental Automotive GmbH, 30165 Hannover (DE)
(72) Erfinder: GRIESBECK, Martin, 94365 Parkstetten (DE); WUNDERLICH, Daniel, 93093 Donaustauf (DE)
(86) Internationale Anmeldenummer: PCT/EP2016/072593
(87) Internationale Veröffentlichungsnummer: WO 2017/063842

(56) Entgegenhaltungen:
- US-A1- 2010 321 399
- US-A1- 2014 058 661

## Beschreibung

Die vorliegende Erfindung betrifft ein Verfahren und eine Vorrichtung zur selektiven Übertragung von einen geographischen Bereich betreffenden Daten zu einem in einem nicht schienengebundenen Fahrzeug befindlichen Empfänger.

In modernen Fahrzeugen, insbesondere nicht schienengebundenen Landfahrzeugen, werden in zunehmendem Maße Daten von externen Sensoren und Datenbanken verarbeitet. In diesem Kontext bezieht sich der Begriff "extern" im Zusammenhang mit Sensoren und Datenbanken auf solche Sensoren und Datenbanken, die nicht mit dem Fahrzeug fest verbunden sind oder die nur zeitweilig in diesem befindlich sind. Entsprechend werden im Folgenden diese Daten als externe Daten bezeichnet.

Die externen Daten werden durch externe Datenquellen, beispielsweise durch andere Fahrzeuge oder durch ortsfeste Datenbanken bereit gestellt. Wenn die externen Daten von anderen Fahrzeugen bereitgestellt werden wird häufig der Begriff "Car-to-Car" oder "Car-2-Car" oder Abwandlungen davon verwendet. Wenn externe Daten von ortsfesten Datenbanken bereitgestellt werden wird häufig der Begriff "Car-to-Infrastructure" oder "Car-2-Infrastructure" oder Abwandlungen davon verwendet. Eine ortsfeste Datenbank im Kontext dieser Beschreibung umfasst auch eine zu einer einzigen virtuellen Datenbank zusammengefasste Kombination mehrerer an unterschiedlichen Orten befindlicher Datenbanken. Die Zusammenfassung kann auch dynamisch veränderlich sein, beispielsweise in Abhängigkeit von einem sich ändernden Datenvolumen. Außerdem kann eine Datenbank im Kontext dieser Beschreibung auch Daten verarbeitende Funktionen ausführen und bereitstellen, beispielsweise Datenanalyse, Filterfunktionen und dergleichen. Die Begriffe "Cloud" oder "Cloud-Computing" werden häufig stellvertretend für derartige Datenbanken verwendet.

Externe, an Fahrzeuge übertragene Daten können Informationen über den derzeitigen Verkehr auf Straßen in der Umgebung des Fahrzeugs oder auf einer geplanten Route enthalten, oder Informationen über Sehenswürdigkeiten oder andere Orte von Interesse in der Umgebung des Fahrzeugs oder entlang einer geplanten Route enthalten. Es ist auch möglich, allgemeine Status- und Zustandsinformationen zu dem Verkehrswegenetz einer Region zu übertragen.

Solche Daten können beispielsweise über ein Rundfunknetz als Broadcast übertragen werden und von jedem geeigneten Empfangsgerät empfangen werden. Wenn Daten an eine Vielzahl von Fahrzeugen übermittelt werden, die über einen großen geographischen Bereich verteilt sind, sinkt der Anteil der für ein jeweiliges Fahrzeug relevanten Daten an der Gesamtmenge der empfangenen Daten. Dennoch müssen zunächst alle Daten empfangen und ggf. gespeichert werden.

Ein erforderlicher Prozess für die individuelle Auswahl der für ein jeweiliges Fahrzeug relevanten Daten kann beträchtliche Ressourcen bei der Speicherung und der Filterung erfordern. Außerdem muss die Datenrate der Übertragung mit zunehmender Menge an Daten ansteigen, wenn ein bestimmter Aktualisierungszeitraum eingehalten werden soll. Dabei sind möglichst kurze Aktualisierungszeiträume aus Sicht der Nutzer wünschenswert und können über Erfolg oder Misserfolg einer Datendienstleistung entscheiden.

Es kann daher sinnvoll sein, für individuelle Fahrzeuge relevante Daten selektiv mittels zielgerichteter Übertragungen zu übermitteln. Dadurch kann die Menge der zu übertragenden Daten für jedes Fahrzeug klein gehalten werden. Daten die nur für eine bestimmte geographische Region relevant sind, z. B. Gefahrenmeldungen auf einer bestimmten Straße, können somit ausschließlich an die Fahrzeuge gesendet werden, die in der betreffenden Region oder auf der betroffenen Straße unterwegs sind oder sein werden.

Die Übertragung kann beispielsweise über einen der bekannten Mobilfunkstandards erfolgen, beispielsweise über das Global System for Mobile Communications (GSM), über das Universal Mobile Telecommunications System (UMTS) oder über das Long Term Evolution System (LTE). Andere drahtlose Kommunikationsstandards wie z. B. IEEE 802.11, IEEE 802.15.4 oder dergleichen, die einen kleineren räumlichen Bereich als die vorgenannten Standards abdecken, können je nach lokalen Begebenheiten und installierter Infrastruktur auch verwendet werden. Dazu kann es notwendig sein, die einzelnen Sender statisch zu einem größeren Netzwerk zu verbinden oder eine dynamische Mesh-Netzwerkstruktur zu verwenden.

Ein Beispiel für die Bereitstellung von Daten zur Verkehrssituation in einem bestimmten räumlichen Bereich ist in Verbindung mit der Microsoft™ Kartenanwendung "Bing Maps" bekannt. Die Kartenanwendung "Bing Maps" weist eine Programmierschnittstelle (Application Programming Interface, API) auf, mittels der Verkehrsdaten zu einer Route (Route API) oder für ein bestimmtes geographisches Gebiet (Traffic API) abgerufen werden kann. Ein Fahrzeug, das über einen mit dem Internet verbundenen Computer, beispielsweise ein Navigationsgerät, verfügt kann mittels einer geeigneten Software die benötigten Verkehrsinformationen individuell abrufen und verarbeiten.

Bei einer individuellen Übertragung derartiger Daten muss das jeweilige Fahrzeug bzw. der jeweilige Empfänger eindeutig identifizierbar sein und seine geographische Position mehr oder weniger genau angeben. Damit ist es möglich, ein Bewegungsprofil des Empfängers zu erstellen, was bei Verknüpfung mit anderen dem Empfänger zuordenbaren Daten zu einer erheblichen Einschränkung der Privatsphäre führen kann.

Aus der US 2010/321399 A1 ist eine Kartenanwendung bekannt, welche die Position des Besitzers mit einer Tracking-Kartenanzeige verfolgt, wobei stets die Mitte der Karte an der aktuellen Benutzerposition gehalten wird. Die Benutzerposition wird für den Datenabruf von Kartenkacheln von einem Server verwendet. Ein Anwendungsbeispiel kann die Navigation in einem Auto sein.

Die US 2014/058661 A1 offenbart Echtzeit-Kartendaten, die zwischen einem Dienstgerät und einem Endgerät aktualisiert werden, für ein eingebautes Kartenstreaming-Navigationssystem eines Fahrzeugs, beispielsweise eines Autos. Die Aktualisierungsbedingungen umfassen einen oder mehrere Bewegungszustände des Endgeräts, eine Bewegungsgeschwindigkeit des Endgeräts und eine Bewegungsrichtung.

Es ist daher eine Aufgabe der vorliegenden Erfindung, ein Verfahren und eine Vorrichtung zur selektiven Übertragung von Daten an einen in einem Fahrzeug befindlichen Empfänger anzugeben, welches eine gegenüber bestehenden Lösungen verbesserte Wahrung der Privatsphäre gewährleistet.

Diese Aufgabe wird durch das in Patentanspruch 1 und Patentanspruch 12 angegebene Verfahren gelöst. Weiterentwicklungen und Abwandlungen des Verfahrens sind in den abhängigen Patentansprüchen angegeben. Vorrichtungen zur Durchführung des Verfahrens sind in den Patentansprüchen 13 und 14, und ein mit einer erfindungsgemäßen Vorrichtung ausgestattetes Fahrzeug in Patentanspruch 15 angegeben.

Das erfindungsgemäße Verfahren zur selektiven Übertragung von Daten von einem Sender zu einem in einem nicht schienengebundenen Landfahrzeug befindlichen Empfänger sieht vor, zunächst mindestens einen geographischen Bereich auszuwählen. Ein geographischer Bereich entspricht dabei einer begrenzten Fläche in einer Landkarte. Es ist für die Erfindung unerheblich, ob geographische Bereiche regelmäßig geformt sind, beispielsweise rechteckig, kreis- oder ellipsenförmig, oder ob die geographischen Bereiche unregelmäßig geformt sind, solange die jeweiligen Bereiche sender- und empfängerseitig übereinstimmen. Der geographische Bereich ist vorzugsweise ein Bereich, in dem sich das Fahrzeug gerade aufhält, oder in dem es sich zukünftig aufhalten wird. In ersterem Fall kann der aktuelle Aufenthaltsort beispielsweise mittels bekannter Verfahren zur Geo-Lokalisation, z. B. mittels satellitengestützter Lokalisation nach dem GPS-Standard, ermittelt werden, und der entsprechende Bereich dann mittels Abgleich mit entsprechenden Kartendaten bestimmt werden. In letzterem Fall kann der Bereich von einer Routenführungseinrichtung gewählt werden, oder es werden ein oder mehrere mögliche Bereiche ausgewählt, die das Fahrzeug demnächst wahrscheinlich durchfahren wird, beispielsweise durch statistische Analyseverfahren oder dergleichen.

Wenn ein oder mehrere Bereiche ausgewählt sind wird eine den oder die ausgewählten Bereiche betreffende Anfrage an einen Sender gesendet, den oder die geographischen Bereiche betreffende Daten zu übertragen. Der Begriff "Sender" steht dabei stellvertretend für eine Datenbank oder eine andere Datenquelle und eine entsprechende Sendeeinrichtung. Es ist dabei unerheblich, ob die Sendeeinrichtung und die Datenbank oder andere Datenquelle in räumlicher Nähe zueinander angeordnet sind oder voneinander entfernt liegen und mittels einer geeigneten Datenverbindung verbunden sind. Die Sendeeinrichtung kann auch ein Netz von mehreren Sendern sein. In jedem Fall muss der Sender die Anfragen empfangen können. Dazu kann die Sendeeinrichtung selbst zur bidirektionalen Datenübertragung ausgelegt sein, oder die Anfrage kann über eine andere Datenverbindung erfolgen als ein Aussenden von Daten in Antwort auf die Anfrage. Die Daten umfassen unter anderem für einen begrenzten Zeitraum gültige Informationen über in dem geographischen Bereich gelegene Verkehrswege Infrastruktur, z. B. aktuelle Verkehrsinformationen, Informationen über Veranstaltungen und dergleichen. Die Daten können aber auch länger gültige Informationen über die Verkehrswege-Infrastruktur umfassen, oder über Sehenswürdigkeiten und dergleichen.

Schließlich werden von dem Sender in Antwort auf die Anfrage übermittelte Daten von dem Empfänger empfangen. Wie vorstehend für den Sender erläutert steht der Begriff "Empfänger" stellvertretend für eine Datenverarbeitungseinrichtung und eine Empfangs- und Sendeeinrichtung. Auch beim Empfänger können die Datenverarbeitungseinrichtung und die Empfangs- und Sendeeinrichtung innerhalb des Fahrzeugs räumlich voneinander getrennt angeordnet und mittels einer geeigneten Datenverbindung miteinander kommunikativ verbunden sein. Dabei kann die Empfangs- und Sendeeinrichtung, wie zuvor für den Sender beschrieben, bidirektional ausgelegt sein, oder über unterschiedliche Datenverbindungen Senden und Empfangen. Es versteht sich von selbst, dass die Datenübertragung drahtlos erfolgt.

In einer Ausgestaltung des erfindungsgemäßen Verfahrens überträgt der Empfänger mit der Anfrage eine eindeutige Identifikation, mittels derer der Sender den Empfänger identifiziert, um die angefragten Daten zu dem Empfänger zu übermitteln. Dabei kann die Identifikation dem Empfänger fest zugeordnet sein, es ist aber auch möglich dass der Empfänger bei jeder Anfrage eine zufällige Identifikation auswählt, die nur für eine Anfrage gültig ist.

In einer Weiterentwicklung der vorstehend beschriebenen Ausgestaltung sendet der Empfänger Anfragen nicht unmittelbar an einen Sender, sondern mit einer jeweils nur für eine Anfrage gültigen Identifikation zunächst an einen zwischengeschalteten Dienst, welcher die Identifikationen mehrerer Empfänger für die eigentliche Anfrage an den Sender zufällig vertauscht, bevor die Anfrage an den Sender weitergeleitet wird. Dabei unterhält der zwischengeschaltete Dienst eine Zuordnungsmatrix, in der die vertauschten Identifikationen eindeutig zugeordnet sind, damit die Antworten den richtigen Empfängern zugeleitet werden können. Ein solcher Anonymisierungsdienst ist beispielsweise unter dem Akronym "TOR" bekannt, welches ursprünglich für "The Onion Router" stand.

In einer Ausgestaltung des erfindungsgemäßen Verfahrens entspricht die Anfrage dem Abschließen eines Abonnements für einen oder mehrere Bereiche betreffende Daten. In dieser Ausgestaltung erfolgen eine oder mehrere Datenübertragungen an den Empfänger, sobald beim Sender neue den oder die Bereiche betreffende Daten vorliegen. Das Abonnement bleibt solange bestehen, bis es vom Empfänger beendet wird. Ein solches Abonnement ist im Umfeld von sogenannten cloud-basierten Datenbanksystemen unter dem Begriff "publish-subscribe" bekannt. Dabei kann vorgesehen sein, dass eine Datenübertragung nur erfolgt, wenn eine Mindestmenge neuer Daten vorliegt. Es kann auch vorgesehen sein, Daten zu kategorisieren, beispielsweise nach Dringlichkeit, und Daten einer höheren Dringlichkeitsstufe stets sofort zu senden, andere Daten aber zunächst zu sammeln. Damit können beispielsweise Informationen zu Unfällen oder Staus sofort gesendet werden, während andere Daten erst gesammelt werden. Das Sammeln von Daten vor einer Übertragung kann zu einer Reduzierung des Datenvolumens führen, insbesondere wenn ein fester Protokoll-Overhead für jede Verbindung anfällt.

In einer Weiterentwicklung des erfindungsgemäßen Verfahrens ist die Größe des oder der geographischen Bereiche am Empfänger selektiv wählbar bzw. einstellbar. Dies kann beispielsweise in Bereichen, die nur wenige Verkehrswege aufweisen, dazu dienen, eine Anzahl möglicher Aufenthaltsorte des Fahrzeugs zu erhöhen und damit die Wahrung der Privatsphäre verbessern.

In einer Ausgestaltung der vorstehend beschriebenen Weiterentwicklung wird die Größe des oder der Bereiche am Empfänger automatisch ausgewählt bzw. eingestellt. Beispielsweise kann die Größenänderung in Abhängigkeit von einer Geschwindigkeit des Fahrzeugs erfolgen. Wenn z. B. das Fahrzeug mit einer ersten, hohen Geschwindigkeit auf einer Autobahn fährt können die Bereiche kleiner gewählt werden, oder auf schmalere Streckenabschnitte entlang der Autobahn begrenzt werden. Wenn dann die Geschwindigkeit verringert wird, können die Bereiche größer gewählt werden, um die Anzahl möglicher Aufenthaltsorte des Fahrzeugs zu erhöhen. Die Verringerung der Geschwindigkeit wird dabei als Indiz für ein Verlassen der Autobahn angesehen, was wiederum als Indiz für eine Annäherung an das eigentliche Fahrtziel gelten kann. Bei einer Verringerung der Geschwindigkeit erfolgt dann die nächste Anfrage nach Daten für einen entsprechend vergrößerten Bereich. Eine vorübergehende Verringerung der Geschwindigkeit, beispielsweise durch Verkehrsaufkommen bedingt, kann unberücksichtigt bleiben, wenn während dieser Zeit keine Anfrage gesendet wird. Das Ansprechverhalten der Anpassung an die Geschwindigkeit kann einstellbar sein. Diese automatische Variation funktioniert auch, wenn keine Route für die Fahrt geplant war. Wenn Anfragen für Bereiche "abonniert" wurden, Daten also nicht per Einzelanfrage abgerufen werden, wird bei dieser Ausgestaltung das Abonnement entsprechend für größere Bereiche geändert.

Bei einer geplanten Route können Bereiche am Anfang und/oder am Ende und/oder an Zwischenzielen der Route größer gewählt werden, um die Anzahl möglicher Startpunkte oder Endpunkte der Route zu vergrößern und eine darüber mögliche Lokalisierung des Fahrzeugs zu erschweren. Andere Bereiche entlang der Fahrtstrecke können entsprechend kleiner gewählt werden, weil eine daraus abzuleitende Information mit hoher Wahrscheinlichkeit weniger Relevanz aufweist. Es ist auch möglich, in der Nähe von Knoten- oder Kreuzungspunkten einer befahrenen Straße oder Strecke die Bereiche größer zu wählen, um Aufschlüsse über die befahrene Strecke zu erschweren.

In einer anderen Ausgestaltung des erfindungsgemäßen Verfahrens wird die Bereichsgröße je nach befahrenem Straßentyp automatisch ausgewählt und/oder ist für unterschiedliche Straßenklassen voreingestellt oder vom Benutzer einstellbar. Straßen können dabei beispielsweise nach den zulässigen Höchstgeschwindigkeiten typisiert oder klassifiziert sein.

In einer anderen Ausgestaltung des erfindungsgemäßen Verfahrens werden Datenübertragungen für mehrere in demselben Bereich befindliche Empfänger per Multicast gesendet. Dieses Verfahren kann insbesondere angewendet werden, wenn diese Empfänger Daten für diesen Bereich "abonniert" haben, die Übertragung also mittels Push-Nachrichten erfolgt, welche nicht jeweils einzeln angefordert werden. Diese Ausgestaltung ist einfach umsetzbar bei vorher festgelegten festen Bereichsgrenzen, kann jedoch auch bei individuell für jedes Fahrzeug ausgewählten Bereichsgrenzen umgesetzt werden. In diesem Fall werden Daten zu Schnittmengen aus den Bereichen per Multicast übertragen.

Wenn feste Bereichsgrenzen vorbestimmt sind können die Bereiche mittels sender- und empfängerseitig bekannten, eindeutigen Kennungen identifiziert und ausgewählt, und Daten dazu angefragt werden. Dadurch kann die Kommunikation und die Datenverwaltung vereinfacht werden.

Unabhängig davon, ob feste oder einstellbare Bereichsgrenzen verwendet werden können benachbarte Bereiche überlappen. Damit kann sichergestellt werden, dass zu jedem befahrenen Streckenabschnitt Informationen abgerufen werden.

Bei einer weiteren Ausgestaltung des erfindungsgemäßen Verfahrens sind zu übertragende Datentypen auswählbar. Datentypen können, wie weitere oben bereits erwähnt, beispielsweise nach dynamischen und statischen Daten unterschieden werden. Dynamische Daten können z. B. Informationen zum derzeitigen Verkehr umfassen, während statische Daten z. B. Informationen über die Verkehrswege selbst enthalten, welche sich nur wenig über die Zeit ändern. Datentypen werden vorzugsweise in Layer gebündelt, so dass ein Empfänger die jeweiligen Datentypen über den entsprechenden Layer anfordern kann. Dabei kann eine Mischung der Anfragen in individuelle Abfragen für bestimmte Layer mit ersten Datentypen und als Abonnement-Anfragen für bestimmte zweite Layer mit zweiten Datentypen erfolgen. Es ist auch möglich, unterschiedliche Bereichsgrößen für unterschiedliche Layer bzw. Datentypen anzufragen.

Senderseitig sieht das Verfahren vor, zunächst eine Anfrage von einem Empfänger zu empfangen, mit dem dieser den Sender auffordert, mindestens einen ausgewählten geographischen Bereich betreffende Daten an den Empfänger zu übertragen. Der Sender initiiert eine entsprechende Datenübertragung an den Empfänger, ggf. nach zuvor erfolgter Extraktion den mindestens einen geographischen Bereich betreffender Daten aus einer Datenbank.

Im Folgenden wird die Erfindung anhand der Zeichnung beschrieben. In der Zeichnung zeigt:
- Fig. 1: eine erste schematische Darstellung einer Landkarte mit quadratischen Bereichen gleicher Größe;
- Fig. 2: eine zweite schematische Darstellung einer Landkarte mit rechteckigen Bereichen unterschiedlicher Größe;
- Fig. 3: eine dritte schematische Darstellung einer Landkarte mit rechteckigen Bereichen unterschiedlicher Größe;
- Fig. 4: eine vierte schematische Darstellung einer Landkarte mit rechteckigen Bereichen unterschiedlicher Größe;
- Fig. 5: eine schematische Darstellung einer empfängerseitigen Vorrichtung zur Durchführung des erfindungsgemäßen Verfahrens; und
- Fig. 6: eine schematische Darstellung einer senderseitigen Vorrichtung zur Durchführung des erfindungsgemäßen Verfahrens.

In den Figuren sind gleiche oder ähnliche Elemente mit denselben Referenzzeichen bezeichnet.

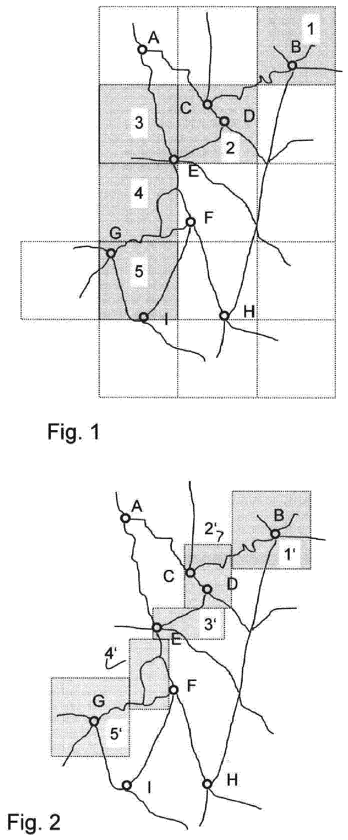

Figur 1 zeigt eine erste schematische Darstellung einer Landkarte mit quadratischen Bereichen gleicher Größe, zur Veranschaulichung einer ersten Ausgestaltung des erfindungsgemäßen Verfahrens. In der Landkarte sind unterschiedliche Orte A bis I dargestellt, sowie mehrere einzelne Orte verbindende Straßen. Für die Beschreibung der ersten Ausführung des Verfahrens wird angenommen, dass ein Fahrer mit seinem Fahrzeug vom Ort B zum Ort G fährt. Dabei möchte der Fahrer während der Fahrt für jeweils befahrene Straßenabschnitte aktuelle Informationen über die Verkehrssituation und den Straßenzustand erhalten.

Wenn der Fahrer sich auf der Route durch ein Navigationssystem leiten lässt kann das Navigationssystem die von der geplanten Route durchquerten oder berührten Bereiche ermitteln und zu diesen Bereichen vorab oder bei Annäherung an einen nächsten zu durchquerenden Bereich eine Anfrage an den Sender stellen, entsprechend Informationen zu übermitteln. Bei der in der Figur gezeigten Route werden demnach bei einer Route, die von B über C nach D und weiter über E nach G führt, Informationen zu den Bereichen 1 bis 5 abgerufen. Die Referenzzeichen der Bereiche sind in der Figur innerhalb der Quadrate angeordnet.

Wenn keine Route vorberechnet wurde können jeweils für den Bereich, in dem sich das Fahrzeug gerade aufhält, entsprechend Informationen abgerufen werden.

Figur 2 zeigt eine zweite schematische Darstellung der Landkarte aus Figur 1 mit quadratischen Bereichen unterschiedlicher Größe, zur Veranschaulichung einer zweiten Ausgestaltung des erfindungsgemäßen Verfahrens. Die von dem Fahrzeug gefahrene Strecke ist dabei dieselbe wie in Figur 1. Im Unterschied zu dem zuvor beschriebenen Verfahren werden hier die Bereiche am Anfang und am Ende der Fahrt größer gewählt, also die Bereiche 1' und 5', als Bereiche, die nur durchfahren werden, kleiner ausgewählt werden, hier die Bereiche 2', 3' und 4'. Diese Ausgestaltung ist besonders einfach bei einer vorab geplanten Route zu realisieren, wobei die jeweilige Abfrage von Informationen zu Bereichen komplett vorab, ggf. ergänzt um aktualisierte Informationen, oder nur bei Bedarf, d. h. bei Annäherung oder Eintritt in einen Bereich erfolgen kann.

Die Verwendung kleinerer Bereiche während der Fahrt bedeutet in der Regel keine wesentliche Verschlechterung der Privatsphäre, da sich eine durchfahrene Route in den meisten Fällen auch bei Verwendung gleich großer Bereiche ermitteln lässt, während ein größerer Bereich im Zielgebiet die Anzahl möglicher Aufenthaltsorte wesentlich erhöht. Die Verwendung kleinerer Bereiche entlang der Strecke bedeutet aber in der Regel eine vorteilhafte Verringerung des zu übertragenden und entsprechend zu speichernden und zu verarbeitenden Datenvolumens.

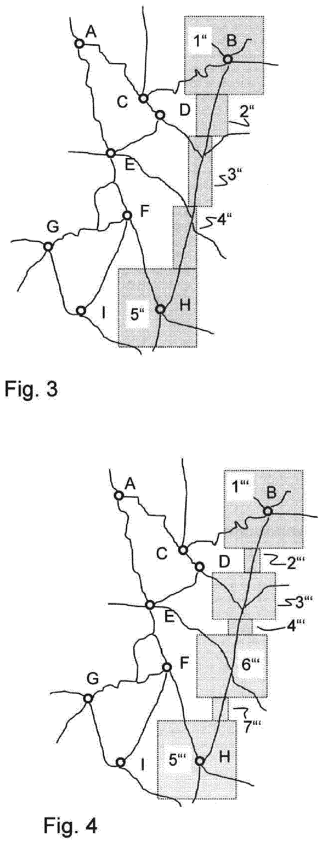

Figur 3 zeigt eine dritte schematische Darstellung der Landkarte aus Figur 1 mit quadratischen Bereichen unterschiedlicher Größe, zur Veranschaulichung einer dritten Ausgestaltung des erfindungsgemäßen Verfahrens.

Die von dem Fahrzeug gefahrene Strecke ist dabei eine andere als in Figur 1 und 2. Hier soll angenommen werden, dass der Fahrer von B nach H fährt, und dass die direkte Verbindung der beiden Orte eine Autobahn oder eine Schnellstraße ist. Wieder sind die Bereiche 1" und 5" am Anfang und am Ende der Strecke größer als entlang der Strecke, mit denselben Vor- und Nachteilen wie unter Figur 2 beschrieben. In dieser Ausgestaltung kann die Bereichsgröße z. B. anhand der Geschwindigkeit des Fahrzeugs automatisch gewählt werden. So sind die Bereiche 2", 3" und 4" entlang der Autobahn oder Schnellstraße kleiner gewählt, weil das Fahrzeug sich hier mit hoher Geschwindigkeit bewegt.

Figur 4 zeigt eine dritte schematische Darstellung der Landkarte aus Figur 1 mit quadratischen Bereichen unterschiedlicher Größe, zur Veranschaulichung einer vierten Ausgestaltung des erfindungsgemäßen Verfahrens.

Die Ausgangssituation ist dieselbe wie in Figur 3, also mit größeren Bereichen 1"' und 5"' am Anfang und am Ende der Strecke, und mit kleineren Bereichen 2"', 4"', 7"' entlang der Strecke. Zusätzlich werden in dieser Ausgestaltung des erfindungsgemäßen Verfahrens die Bereiche 3'" und 6"', welche Knotenpunkte oder Kreuzungen enthalten, größer gewählt als Bereiche ohne solche Merkmale. Hierbei kann vorzugsweise ausgewählt werden, Knotenpunkte oder Kreuzungen welcher Kategorie Straße berücksichtigt werden, also z. B. nur kreuzende Autobahnen oder Schnellstraßen. Damit können mögliche Aufenthaltsorte des Fahrzeugs entlang der Fahrtstrecke häufiger mit einer geringeren Wahrscheinlichkeit verbunden werden, also für einen Dritten schlechter einzuschätzen sein. Außerdem kann ein mögliches Fahrtziel für einen Dritten, der Anfragen zu Bereichen auswertet, erst später erkennbar sein.

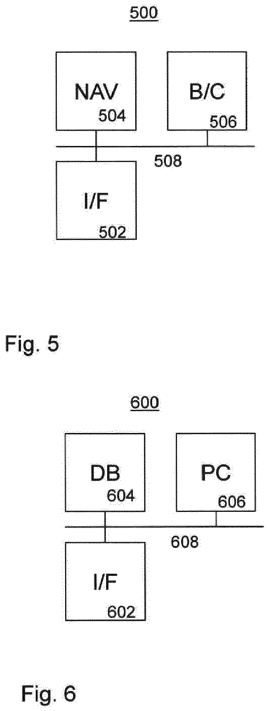

Figur 5 zeigt eine schematische Darstellung einer empfängerseitigen Vorrichtung 500 zur Durchführung des empfängerseitigen Teils des erfindungsgemäßen Verfahrens. Die Vorrichtung 500 umfasst eine drahtlose Schnittstelle, 502, eine Routenführungsvorrichtung, 504 und einen Bordcomputer 506, welche mittels einem oder mehreren Bussystemen 508 kommunikativ miteinander verbunden sind. Die Routenführungsvorrichtung 504 ist dazu eingerichtet, einen derzeitigen Aufenthaltsort eines Fahrzeugs (nicht gezeigt), in dem die empfängerseitige Vorrichtung 500 eingebaut ist oder sich vorübergehend befindet, zu ermitteln, oder eine Route zwischen zwei Orten zu bestimmen. Die Routenführungsvorrichtung 504 ist ferner dazu eingerichtet, Bereiche auf einer Landkarte entsprechend einer oder mehreren der vorstehend beschriebenen Ausgestaltungen des erfindungsgemäßen Verfahrens auszuwählen, und über die Schnittstelle 502 eine Anfrage an eine senderseitige Vorrichtung (nicht gezeigt) zu senden, Daten zu ausgewählten Bereichen zu übermitteln. Dabei kann die Routenführungseinrichtung 504 optional zusätzlich Informationen von dem Bordcomputer 506 bei der Auswahl von Bereichen verwenden, z. B. eine derzeitige Geschwindigkeit, einen durch ein Fahrtrichtungssignal angezeigten Fahrtrichtungswechsel, eine durch Objekterkennung aus einem Kamerabild ermittelte Umleitungsempfehlung, oder dergleichen.

Einzelne oder mehrere der Komponenten der empfängerseitigen Vorrichtung 500 können neben einer Stromversorgung und einer Benutzerschnittstelle auch Mikroprozessoren sowie flüchtigen und/oder nichtflüchtigen Speicher aufweisen, in denen Programmcode und Daten gespeichert und/oder ausgeführt werden (nicht gezeigt). Der ausgeführte Programmcode bewirkt eine Ausführung einer oder mehrerer Ausgestaltungen oder Weiterentwicklungen des vorstehend beschriebenen empfängerseitigen Teils des erfindungsgemäßen Verfahrens.

Figur 6 zeigt eine schematische Darstellung einer senderseitigen Vorrichtung 600 zur Durchführung des senderseitigen Teils des erfindungsgemäßen Verfahrens. Die Vorrichtung 600 umfasst eine drahtlose Schnittstelle, 602, eine Datenbank 604 und einen Computer 606, welche mittels einem oder mehreren Bussystemen 608 kommunikativ miteinander verbunden sind. Die Vorrichtung 600 ist dazu eingerichtet, über die Schnittstelle 602 Anfragen bezüglich der Übertragung von Daten einen oder mehrere Bereiche auf einer Landkarte betreffend zu empfangen. Die Daten werden von einem Computer 606 aus einer Datenbank 604 gelesen und über die Schnittstelle 602 an jeweilige Empfänger gesendet.

Einzelne oder mehrere der Komponenten der senderseitigen Vorrichtung 600 können neben einer Stromversorgung und einer Benutzerschnittstelle auch Mikroprozessoren sowie flüchtigen und/oder nichtflüchtigen Speicher aufweisen, in denen Programmcode und Daten gespeichert und/oder ausgeführt werden (nicht gezeigt). Der ausgeführte Programmcode bewirkt eine Ausführung des vorstehend beschriebenen senderseitigen Teils des erfindungsgemäßen Verfahrens.

Die Schnittstellen 502 und 602 können dabei auch eine Kombination von drahtlosen Schnittstellen unterschiedlicher Typen umfassen, wobei Anfragen und entsprechende Antworten über unterschiedliche Typen von Schnittstellen empfangen bzw. gesendet werden können.

Durch die Anfrage betreffend Informationen zu einem Bereich auf einer Landkarte anstelle zu einer exakten Position oder Fahrtstrecke ist es Dritten nicht möglich, mittels ausschließlich aus der Analyse der Anfrage erhaltener Daten einen Aufenthaltsort eines Fahrzeugs mit hoher Genauigkeit zu bestimmen.

## Patentansprüche

1. Verfahren zur selektiven Übertragung von Daten von einem Sender (600) zu einem in einem nicht schienengebundenen Landfahrzeug befindlichen Empfänger (500), wobei das Verfahren empfängerseitig umfasst:
- Auswählen mindestens eines geographischen Bereichs, wobei ein geographischer Bereich einer begrenzten Fläche in einer Landkarte entspricht,
- Senden einer Anfrage an den Sender (600), den mindestens einen ausgewählten geographischen Bereich betreffende Daten zu übertragen,
- Empfangen einer von dem Sender (600) in Antwort auf die Anfrage initiierten Datenübertragung,
**dadurch gekennzeichnet, dass** eine Größe der einem geographischen Bereich entsprechenden begrenzten Fläche, für die Daten übertragen werden, derart einstellbar ist, dass sie in Abhängigkeit von einer Geschwindigkeit des Landfahrzeugs automatisch variiert wird und/oder entlang einer geplanten Route variabel ist, wobei Bereiche am Anfang und am Ende der Route, an geplanten Zwischenhalten oder an Kreuzungspunkten entlang der Route größer sind als auf ohne Halten durchfahrenen Abschnitten der Route.

2. Verfahren nach Anspruch 1, **dadurch gekennzeichnet, dass** der Empfänger (500) bei der Anfrage an den Sender (600) eine eindeutige Identifikation überträgt, mittels derer der Sender (600) den Empfänger (500) identifiziert, um die angefragten Daten zu dem Empfänger (500) zu übermitteln.

3. Verfahren nach Anspruch 1, **dadurch gekennzeichnet, dass** das Senden der Anfrage dem Abschließen eines Daten-Abonnements für den ausgewählten geographischen Bereich entspricht, und dass das Empfangen ein Empfangen von ein oder mehreren an die Identifikation des Empfängers (500) gerichteten Datenübertragungen umfasst welches periodisch oder ereignisgesteuert solange durchgeführt wird, bis das Abonnement durch den Empfänger (500) beendet wird.

4. Verfahren nach Anspruch 1, **dadurch gekennzeichnet, dass** der mindestens eine geographische Bereich so ausgewählt ist, dass er einen momentanen Aufenthaltsort des Landfahrzeugs einschließt.

5. Verfahren nach Anspruch 1, **dadurch gekennzeichnet, dass** der mindestens eine geographische Bereich so ausgewählt ist, dass er geplante zukünftige Aufenthaltsorte des Landfahrzeugs einschließt.

6. Verfahren nach Anspruch 1, **dadurch gekennzeichnet, dass** die Anfrage vom Empfänger (500) zum Sender (600) und die Datenübertragung vom Sender (600) zum Empfänger (500) über mindestens eine drahtlose Schnittstelle (502, 602) erfolgen.

7. Verfahren nach Anspruch 1, **dadurch gekennzeichnet, dass** geographische Bereiche vorbestimmt oder vordefiniert sind, dass die vorbestimmten oder vordefinierten Bereiche senderseitig und empfängerseitig mittels eindeutiger Kennungen identifizierbar sind, und dass der mindestens eine Bereich in der Anfrage des Empfängers (500) und/oder der Datenübertragung durch den Sender (600) durch die Kennung identifiziert ist.

8. Verfahren nach einem der vorhergehenden Ansprüche,
**dadurch gekennzeichnet, dass** die den mindestens einen ausgewählten geographischen Bereich betreffende Daten für einen begrenzten Zeitraum gültige Informationen über in dem geographischen Bereich gelegene Verkehrswege-Infrastruktur beinhalten.

9. Empfängerseitige Vorrichtung mit mindestens einer drahtlosen Schnittstelle (502), einem Computer (506) und einer Einrichtung zur Ermittlung einer derzeitigen Position auf der Erdoberfläche (504), welche mittels einem oder mehreren Bussystemen (508) kommunikativ miteinander verbunden sind, **dadurch gekennzeichnet, dass** in der Einrichtung zur Ermittlung einer derzeitigen Position auf der Erdoberfläche (504) oder in dem Computer (506) Programmanweisungen gespeichert sind, welche, wenn sie durch die Einrichtung zur Ermittlung einer derzeitigen Position auf der Erdoberfläche (504) oder den Computer (506) ausgeführt werden, das Verfahren nach einem oder mehreren der Ansprüche 1 bis 8 ausführen.

10. Nicht schienengebundenes Landfahrzeug mit einer empfängerseitigen Vorrichtung nach Anspruch 9.

## Claims

1. Method for selectively transmitting data from a transmitter (600) to a receiver (500) in a non-railbound land vehicle, wherein the method at the receiver end comprises:
- selecting at least one geographical region,
wherein a geographical region corresponds to a limited area on a map,
- transmitting a request to the transmitter (600) to transmit data relating to the at least one selected geographical region,
- receiving a data transmission initiated by the transmitter (600) in response to the request,
**characterized in that** a size of the limited area which corresponds to a geographical region and for which data are transmitted is adjustable in such a way that it is automatically varied on the basis of a speed of the land vehicle, and/or is variable along a planned route, wherein regions at the start and end of the route, at planned intermediate stops or at intersections along the route are larger than on sections of the route which are driven through without stopping.

2. Method according to Claim 1, **characterized in that** the receiver (500) transmits, in the request to the transmitter (600), a unique identification which is used by the transmitter (600) to identify the receiver (500) in order to transmit the requested data to the receiver (500).

3. Method according to Claim 1, **characterized in that** the transmission of the request corresponds to the negotiation of a data subscription for the selected geographical region, and **in that** the receiving comprises receiving one or more data transmissions addressed to the identification of the receiver (500), which is carried out periodically or in an event-controlled manner until the subscription is ended by the receiver (500).

4. Method according to Claim 1, **characterized in that** the at least one geographical region is selected in such a manner that it includes a current position of the land vehicle.

5. Method according to Claim 1, **characterized in that** the at least one geographical region is selected in such a manner that it includes planned future positions of the land vehicle.

6. Method according to Claim 1, **characterized in that** the request from the receiver (500) to the transmitter (600) and the data transmission from the transmitter (600) to the receiver (500) are effected using at least one wireless interface (502, 602).

7. Method according to Claim 1, **characterized in that** geographical regions are predetermined or predefined, **in that** the predetermined or predefined regions can be identified at the transmitter end and at the receiver end by means of unique identifiers, and **in that** the at least one region is identified by the identifier in the request from the receiver (500) and/or in the data transmission by the transmitter (600).

8. Method according to one of the preceding claims, **characterized in that** the data relating to the at least one selected geographical region contain information relating to a traffic route infrastructure in the geographical region, which information is valid for a limited period.

9. Receiver-end apparatus having at least one wireless interface (502), a computer (506) and a device for determining a current position on the earth's surface (504) which are communicatively connected to one another by means of one or more bus systems (508), **characterized in that** the device for determining a current position on the earth's surface (504) or the computer (506) stores program instructions which, when executed by the device for determining a current position on the earth's surface (504) or the computer (506), carry out the method according to one or more of Claims 1 to 8.

10. Non-railbound land vehicle having a receiver-end apparatus according to Claim 9.

## Revendications

1. Procédé de transmission sélective de données d'un émetteur (600) à un récepteur (500) situé dans un véhicule terrestre non ferroviaire, dans lequel le procédé comprend, côté récepteur :
- la sélection d'au moins une zone géographique, dans lequel une zone géographique correspond à une zone limitée sur une carte terrestre,
- l'émission d'une demande auprès de l'émetteur (600) pour transmettre des données relatives à ladite au moins une zone géographique sélectionnée,
- la réception d'une transmission de données déclenchée par l'émetteur (600) en réponse à la demande,
**caractérisé en ce qu'**une taille de ladite zone limitée correspondant à une zone géographique pour laquelle des données sont transmises est réglable de manière à ce qu'elle soit amenée à varier automatiquement en fonction d'une vitesse du véhicule terrestre et/ou à ce qu'elle soit variable le long d'un itinéraire planifié, dans lequel des zones situées au début et à la fin de l'itinéraire, aux escales planifiées ou en des points d'intersection le long de l'itinéraire sont plus grandes que sur des sections de l'itinéraire parcourues sans escales.

2. Procédé selon la revendication 1, **caractérisé en ce que** le récepteur (500) transmet à l'émetteur (600), lors de la demande, une identification unique au moyen de laquelle l'émetteur (600) identifie le récepteur (500) afin de transmettre les données demandées au récepteur (500).

3. Procédé selon la revendication 1, **caractérisé en ce que** l'émission de la demande correspond à l'établissement d'un abonnement de données pour la zone géographique sélectionnée, et **en ce que** la réception comprend la réception d'une ou plusieurs transmissions de données destinées à l'identification du destinataire (500), qui est effectuée périodiquement ou de manière commandée par événements, jusqu'à ce que l'abonnement soit interrompu par le récepteur (500).

4. Procédé selon la revendication 1, **caractérisé en ce que** ladite au moins une zone géographique est sélectionnée de manière à inclure une localisation actuelle du véhicule terrestre.

5. Procédé selon la revendication 1, **caractérisé en ce que** ladite au moins une zone géographique est sélectionnée de manière à inclure des localisations futures planifiées du véhicule terrestre.

6. Procédé selon la revendication 1, **caractérisé en ce que** la demande du récepteur (500) à l'émetteur (600) et la transmission de données de l'émetteur (600) au récepteur (500) s'effectuent par l'intermédiaire d'au moins une interface sans fil (502, 602).

7. Procédé selon la revendication 1, **caractérisé en ce que** des zones géographiques sont prédéterminées ou prédéfinies, **en ce que** les zones prédéterminées ou prédéfinies peuvent être identifiées côté émetteur et côté récepteur au moyen d'identificateurs uniques, et **en ce que** ladite au moins une zone est identifiée par l'intermédiaire de l'identifiant dans la demande du récepteur (500) et/ou la transmission de données par l'émetteur (600).

8. Procédé selon l'une des revendications précédentes, **caractérisé en ce que** les données relatives à ladite au moins une zone géographique sélectionnée comprennent, pour un intervalle de temps limité, des informations valables concernant une infrastructure routière située dans la zone géographique.

9. Dispositif côté récepteur comportant au moins une interface sans fil (502), un ordinateur (506) et un dispositif de détermination d'une position instantanée sur la surface terrestre (504), qui sont reliés entre eux par voie de communication au moyen d'un ou plusieurs systèmes de bus (508), **caractérisé en ce que** des instructions de programme sont stockées dans le dispositif de détermination d'une position instantanée sur la surface terrestre (504) ou dans l'ordinateur (506), qui, lorsqu'elles sont exécutées par le dispositif de détermination d'une position instantanée sur la surface terrestre (504) ou par l'ordinateur (506), mettent en oeuvre le procédé selon l'une ou plusieurs des revendications 1 à 8.

10. Véhicule terrestre non ferroviaire comportant un dispositif côté récepteur selon la revendication 9.
